# EUROPEAN PATENT APPLICATION

(11) **EP 3 396 346 A1**
(43) Date of publication of application: **31.10.2018**
(21) Application number: 17168397.2
(22) Date of filing: 27.04.2017
(51) Int. Cl.: G01L 27/00

(54) **PRESSURE SENSOR VERIFICATION DEVICE AND METHODS OF OPERATION AND MANUFACTURING**

(71) Applicant: Siemens Aktiengesellschaft, 80333 München (DE)
(72) Inventor: Andersson, Nils-Erik, 61238 Finspong (SE); Deurell, Jonas, 61690 Aby (SE); Roman, Daniel, 61243 Finspang (SE)

(57) **Abstract**

The invention is directed to a pressure sensor verification device (1), particularly for verification and/or calibration of a dynamic pressure sensor, and also methods of manufacturing and operation of this. The device (1) comprises a body (2) comprising a fluid channel (3) for guiding a pressurised fluid (13), an input port (12) of the body (2) for the fluid channel (3), via which the pressurised fluid (13) is providable to the fluid channel (3), a frequency adjustment component (10) located at a first position (41) in the fluid channel (3) for setting and/or adjusting a frequency of fluid oscillations within the fluid channel (3), an amplitude adjustment component (11) located at a second position (42) in the fluid channel (3) for setting and/or adjusting an amplitude of the fluid oscillations within the fluid channel (3), a first aperture (20) in the body (2) to the fluid channel (3), the first aperture (20) being located at a third position (43) and arranged to provide a fluidic connection to a connectable reference pressure sensor (22), a second aperture (21) in the body (2) to the fluid channel (3), the second aperture (21) being located at the third position (43) and arranged to provide a fluidic connection to a connectable, to be verified or to be calibrated pressure sensor (23), and at least one sensor signal output interface (25,26) for providing signals from the pressure sensor (23) and/or signals from the reference pressure sensor (22) during operation.

## Description

### FIELD OF THE INVENTION

The invention relates to a pressure sensor verification device, particularly for verification and/or calibration of a dynamic pressure sensor. It can be used to check the operation of such a dynamic pressure sensor which may be used in combustion regions of a gas turbine engine.

### BACKGROUND OF THE INVENTION

When operating a gas turbine engine or other technical equipment it may be important to check the performance and/or health of used sensors in the engine. Particularly dynamic pressure sensors should be checked for their valid and correct operation. Dynamic pressure sensors may include a membrane via which pressure fluctuations can be sensed. A partially broken sensor or a poorly installed sensor could measure incorrect pressure values compared to the natural pressure in the region of the installed sensor. Over time this could lead to damage of the component at which the pressure sensor is installed, for example the combustor of a gas turbine engine.

### SUMMARY OF THE INVENTION

The present invention seeks to provide a solution to verify or to calibrate such a pressure sensor component.

This objective is achieved by the independent claims. The dependent claims describe advantages developments and modifications of the invention.

In accordance with the invention there is provided a pressure sensor verification device, particularly for verification and/or calibration of a dynamic pressure sensor, which comprises a body which in turn comprises a fluid channel for guiding a pressurised fluid. The pressure sensor verification device further comprises an input port of the body for the fluid channel, via which the pressurised fluid is provable to the fluid channel. It further comprises a frequency adjustment component located at a first position in the fluid channel for setting and/or adjusting a frequency of fluid oscillations within the fluid channel. Besides it further comprises an amplitude adjustment component located at a second position in the fluid channel for setting and/or adjusting an amplitude of the fluid oscillations within the fluid channel. The pressure sensor verification device further comprises a first aperture in the body to the fluid channel, the first aperture being located at the third position and arranged to provide a fluid connection to a connectable reference pressure sensor. The device further comprises a second aperture in the body to the fluid channel, the second aperture being located at the third position and arranged to provide a fluid connection to connectable, to be verified or to be calibrated pressure sensor. Further the device comprises at least one sensor signal output interface for providing signals from the pressure sensor and/or signals from the reference pressure sensor during operation.

Such a device allows to process, e.g. collect, sensor signals from a reference sensor and to be tested sensor and provides this information for further examination. The examination of the generated signals can be processed automatically or manually, for example via an oscilloscope. This allows easy detection of malfunction of the to be tested pressure sensor. The pressure sensor verification device may be preferably a handheld device. The body may preferably be generated as a single component.

The fluid channel may particularly be a pipe with a circular or elliptical cross section which is embodied as an integral part in the body. So the fluid channel may be particularly be a cylindrical passage but may include also some bends in this cylindrical shape.

The pressurised fluid may particularly be air, preferably pressurised from approximately 3 up to 8 Bar. The air may be feeble from ambient air by a compressor or from an air pressure tank. The pressurised fluid acts as a test fluid so that the to be tested pressure sensor can be verified in its performance.

The amplitude adjustment component may be a regulator or restrictor for the fluid channel diameter.

The first and/or the second aperture may be preferably oriented laterally to the expanse of the fluid channel.

The first aperture may be preferably opposite to the second aperture so that the two apertures are facing each other in the fluid channel.

The pressure sensor and/or the reference pressure sensor may be directly plugged or connected into the first and/or second aperture or alternatively may be connected to these apertures via intermediate wave guide. Such a wave guide is a component that delivers or guides waves through its expanse from the fluid channel to the pressure sensor.

The reference pressure sensor may be preferably of a piezo-electric type. The to be verified pressure sensor may be preferably of optical, piezo-electric, resistive, or piezo-type. So all these different sensor types can be tested via the pressure sensor verification device.

The specified positions - the first position, second position and third position - of the fluid channel are understood as locations along the length of the fluid channel. As the reference pressure sensor and the to be tested pressure sensor are defined as being located both at the third position this substantially means that they have the same distance to the input port of the fluid channel. The term same is meant as being approximately in the same distance to the input port but obviously some deviations are acceptable. Substantially this means that the first and the second aperture may be in the same vicinity.

According to the given configuration the pressure sensor verification device can be a portable device with an installed reference pressure sensor and that allows to check the to be tested pressure sensors at the location of the site or location of the to be inspected engine. This allows very flexible operation of such a verification device. For example it allows that the to be tested sensor remains in its installed position, for example if a waveguide is used to deliver the test fluid pressure through the pressure sensor verification device to the to be tested pressure sensor via the wave guide. Such a pressure sensor verification device can be used in a lab but also be used at a costumer site where sensors are going to be tested.

In an exemplary embodiment the pressure sensor verification device further comprises an evaluation unit for comparing the signals from the pressure sensor and the signals from the reference pressure sensor with another, the signals being provided from the at least one sensor signal output interface during operation. Preferably simultaneous signals are evaluated, but possibly a phase shift will be accommodated by the evaluation unit. Alternatively one of the generated signals can also be compared to stored nominal oscillation data, the latter defining a perfect oscillation which should also be generated by the to be tested pressure sensor based on the configuration of the pressure sensor verification device.

In another exemplary embodiment the pressure sensor verification device may be arranged such that the to be tested pressure sensor can be connected just temporarily to this device. This can be performed such that the pressure sensor is insertable in a socket of the body such that the pressure sensitive sensor face or membrane of the pressure sensor is located in the second aperture. Alternatively the pressure sensor may be connectable via waveguide (also called herein as waveguide pipe) to a socket of the body such that a pressure sensitive sensor of face or membrane of the pressure sensor is connected to the waveguide. So this allows an indirect connection of the pressure sensor to the fluid channel. The mentioned socket will connect to the second aperture, so that the pressure sensor front face will be directly affected by pressure fluctuations in the fluid channel.

The same way of connecting may also be possible for the reference pressure sensor. So the reference pressure sensor can be inserted directly in the further socket of the body or can be connected via a waveguide to such a socket and to the fluid channel.

In a preferred example the amplitude adjustment component may comprise a regulator to alter an amount of fluid flow of the pressurised fluid through the fluid channel during operation. This adjustment may be possible via a potentiometer.

The frequency adjustment component may comprise a continuously turning wheel at a variable speed to repeatedly and consecutively block and unblock or throttle and increase a fluid flow in the fluid channel during operation, preferably to generate an oscillation of the fluid flow substantially in form of a sine wave. In consequence the dynamic pressure sensor which is tested and also the reference sensor should show the same substantially identical sine wave if the signals are evaluated from them. If both show the same sine wave with the same amplitude and the same phase and period this would be the verification that the to be tested sensor is still properly operating.

To generate such a sine wave or in general such oscillation the turning wheel may be configured as a tooth wheel or as a circumferentially slotted wheel with a widening and consecutively narrowing slot in circumferential direction. Both of these configurations allow to generate a substantially sine wave signal.

In another exemplary embodiment the amplitude adjustment component and/or the frequency adjustment component each may be operated by a potentiometer for configuration of the amplitude or frequency setting. Particularly the frequency adjustment component may be driven a motor, particularly a pneumatic motor, which is air driven.

The first, the second, and the third position define different positions, i.e. non identical positions along the fluid channel. That means the first, the second and the third position define different longitudinal positions along a length of the fluid channel. Preferably the second position may be located upstream of the third position and/or the third position may be located upstream of the first position.

Depending on the size and shape of the pressure sensor verification device other orientation of these positions can be considered.

In an alternative embodiment the body may comprise a replaceable adapter element, wherein the first aperture and the second aperture are arranged in the replaceable adapter element, the adapter element further also forming a section of the fluid channel at the third position when the adapter element is inserted into a recess of the body.

As previously said the pressure sensor verification device may be a portable device. A segment of the body may be formed as a handle for carrying the pressure sensor verification device and/or for mounting the pressure sensor verification device to an engine equipped with the pressure sensor to be tested, wherein a section of the fluid channel is arranged inside the handle.

In a further embodiment the first membrane may be positioned in the first aperture and/or the second membrane may be positioned in the second aperture. That means that the fluid channel is not open at the location of the aperture but allows an indirect application of pressure differences to the sensor which is connected behind the membrane.

In another embodiment the pressure sensor verification device may further comprise at least one outlet port or a distributed region of leakage to exhaust the fluid from the fluid channel into the surroundings.

The invention is further directed also to a method of manufacturing of such a pressure sensor verification device as previously defined. In that method the body may be generated via additive manufacturing, particularly via a powder bed fusion process, more preferably via selective laser melting.

Further the invention is also directed to a method of operating such a pressure sensor verification device comprising the steps of:
(a) Connecting the reference pressure sensor to the first aperture;
(b) Connecting the to be verified or to be calibrated pressure sensor to the second aperture;
(c) Supplying the pressurised fluid to the input port with a given, particularly constant, pressure;
(d) Throttling a throughflow of the fluid through the fluid channel in consequence of the amplitude adjustment component being altered to a test amplitude, particularly by reducing a cross sectional area of the fluid channel at the second position.
(e) Setting a pressure oscillation frequency in consequence of the frequency adjustment component being set to a test frequency, particularly by setting a rotational speed of a turning wheel of the frequency adjustment component;
(f) Providing pressure signals from the pressure sensor and the reference pressure sensor overtime via the at least one sensor signal output interface.

The turning wheel may be defined as previously explained. Besides, the sensor signal output interface may allow to review the generated pressure sensor signals via an oscilloscope.

If the pressure signals should be evaluated by an automatic process the method of operating a pressure sensor verification device may also include the further step of comparing simultaneous pressure signals from the pressure sensor and the reference pressure sensor, the simultaneous pressure signals may be provided from the at least one sensor signal output interface.

To verify the health and the performance of the to be tested dynamic pressure sensor it may be an advantageous implementation that several of the previously defined steps will be repeated while changing the settings of the amplitude and the frequency. This allows to check the operation of the sensor over a number of different work points.

Aspects defined above and further aspects of the present invention are apparent from the examples of the embodiment to be described here and after and are explained with the reference to the examples of the embodiment.

### BRIEF DESCRIPTION OF THE DRAWINGS

Embodiments of the invention will now be described, by a way of example only, with reference to the accompanying drawings, of which:
- Figure 1:: shows schematically a sectional view of such a pressure sensor verification device;
- Figures 2: to 5: illustrates the design of an exemplary turning wheel;
- Figure 6:: illustrates an alternative embodiment of a turning wheel;
- Figure 7:: shows an outside view of such a pressure sensor verification device if embodied as a handheld device.

The illustration in the drawing is schematic. It is noted, that for similar or identical elements in different figures, the same referent signs will be used.

Some of the features and especially the advantages will be explained in relation to a gas turbine, but obviously the device can be applied also to other types of engines which are equipped with a dynamic pressure sensor. Advantages may be present only once assembled and during operation. But when explained by means of a device during operation none of the details should be limited to a device while in operation.

### DETAILED DESCRIPTION OF THE INVENTION

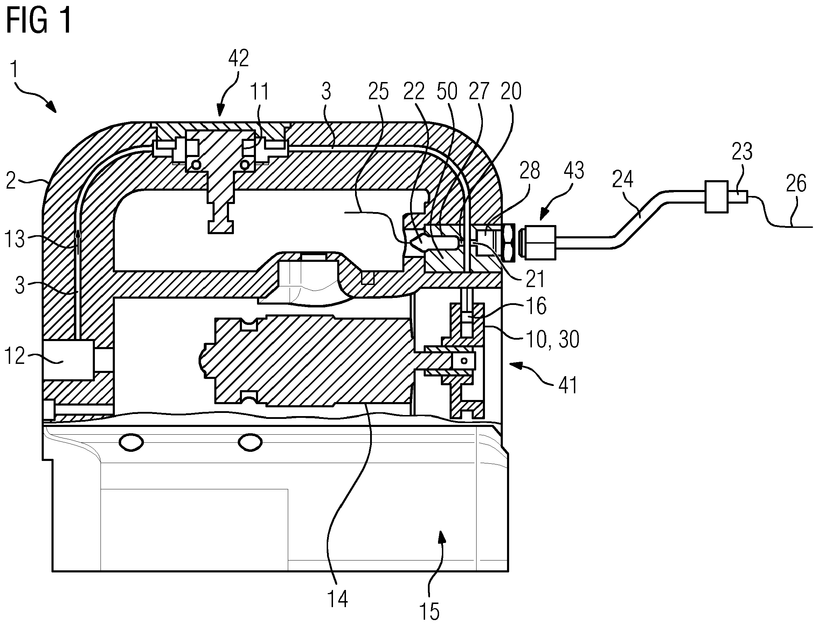

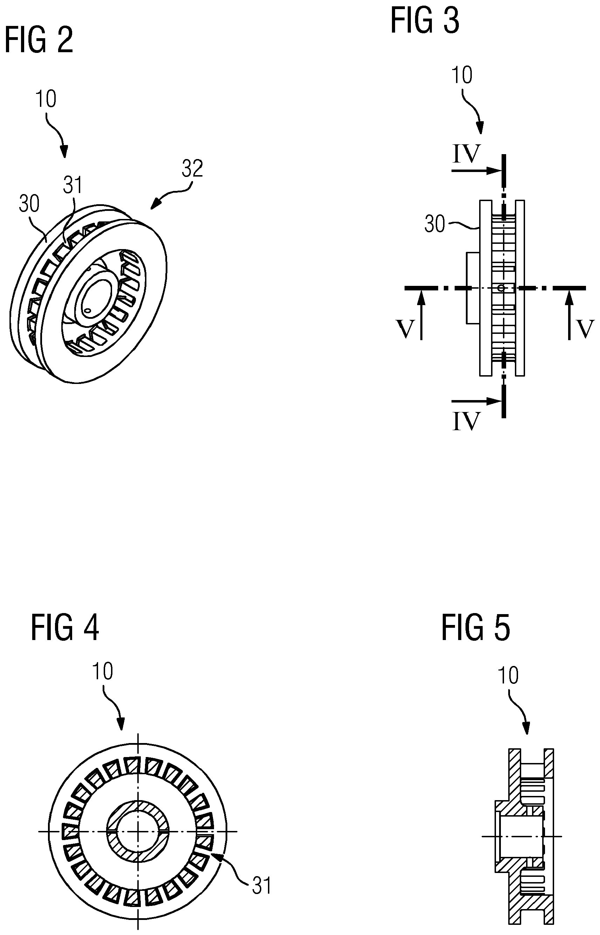

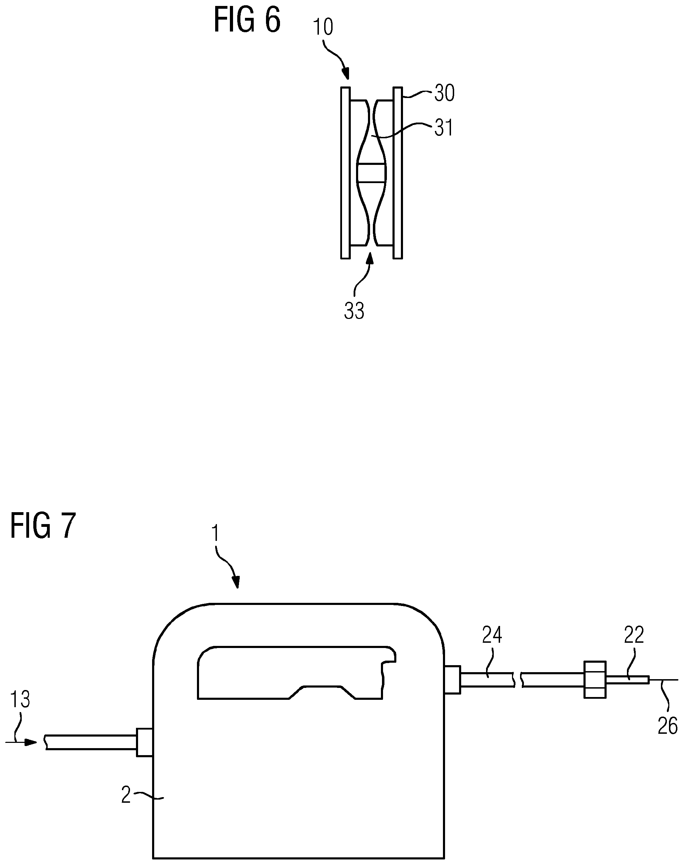

Referring now to FIG. 1 the pressure sensor verification device as shown in a cross-sectional view. FIG. 7 shows the same device from its outside. A pressure sensor verification device 1 is shown in the figures with a body 2 and an incorporated fluid channel 3 within the body 2. The fluid channel 3 is present to deliver pressurised fluid through the body 2. The pressure sensor verification device 1 comprises further a frequency adjustment component 10 and an amplitude adjustment component 11 which are both part of the fluid channel 3. The amplitude adjustment component 11 may be a potentiometer that can reduce the aperture of the fluid channel 3 at the position of the amplitude adjustment component 11. The frequency adjustment component 10 may be a turning wheel with one or a plurality of slots which will be explained in more detail in relation to FIG. 2 to 6.

The body 2 comprises an input port 12 which allows a connection to an additional supply element that will provide pressurised fluid 13 (as indicated in FIG. 7). This supply of pressurised fluid 13 may be from a tank of pressurised air or may be taken from a compressor. Starting from the input port 12, the pressurised fluid 13 will be guided through the fluid channel 3 and passing the previously mentioned frequency adjustment component 10 and amplitude adjustment component 11.

Incorporated in the body 2 the first aperture 20 is present to provide an opening or connection to the fluid channel 3. Furthermore a second aperture 21 is present in the body 2 to provide a further opening or connection to the fluid channel 3. The first aperture 20 is present to host a connectable reference pressure sensor 22. The second aperture 21 is present to provide a fluidic connection to a connectable, to be verified or to be calibrated pressure sensor, which will be called in the following test pressure sensor 23. In the shown embodiment of FIG. 1 the reference pressure sensor 22 is directly inserted into the first aperture 20. As a further possibility to connect a sensor - which may also apply to the reference pressure sensor 22 - the test pressure sensor 23 is not directly inserted into the second aperture 21 but a waveguide 24 is present to provide a pressure wave transparent connection from the second aperture 21 to a remotely located test pressure sensor 23. The waveguide 24 can also be called waveguide pipe. The sensor signals from the reference pressure sensor 22 and a test pressure sensor 23 - or converted representations of these signals - can be delivered from a reference sensor signal output interface 25 and a test sensor signal output interface 26 to further components. In the given example these interfaces 25, 26 are only indicated as cables which can deliver analogue signals or digital data to a further component.

The pressure sensor verification device 1 further comprises a motor 14 that is connected to the frequency adjustment component 10 so that during operation this frequency adjustment component 10 is driven by the motor 14 to generate an oscillation in the fluid channel 3. Furthermore the pressure sensor verification device 1 comprises an auxiliary compartment 15 which may be a compartment to hold a battery pack for driving the motor 14.

The fluid channel 3 may have an exhaust port 16 which will exhaust the pressurised fluid 13 from the fluid channel 3 during operation. In the given example of FIG. 1 the exhaust port 16 ends at the frequency adjustment component 10.

The frequency adjustment component 10 and the amplitude adjustment component 11 may be configurable components so that the frequency and/or the amplitude of pressurised fluid 13 delivered through the fluid channel 3 can be configured. During operation compressed fluid may be delivered to the input port 12 and will be guided as pressurised fluid 13 through the fluid channel 3 of the body 2. The amplitude will be set by the amplitude adjustment component 11. Furthermore the motor 14 will drive the frequency adjustment component 10 at the given speed so that the fluid inside the fluid channel 3 will experience some oscillations within the fluid channel 3. The reference pressure sensor 22 and the test pressure sensor 23 will be affected by these fluctuations in the fluid channel 3 and will generate corresponding signals representing the pressure at a specific time slot via the reference sensor signal output interface 25 and the test sensor signal output interface 26. The collected sensor signals - preferably collected over time - can further be processed by different entity or can be provided to an oscilloscope. The signals can be compared by the oscilloscope or by a further component and differences in the signals of the sensors will become apparent. By this, incorrect behaviour of the test pressure sensor 23 can be derived.

In the given example of FIG. 1 the reference pressure sensor 22 is inserted into a first socket 27 which then is connected to the first aperture 20. The test pressure sensor 23 is connected via the waveguide 24 and one end of the waveguide 24 is inserted into a second socket 28 which furthermore is directly connected to the second aperture 21. By this, pressure fluctuations in the fluid channel 3 can be provided to both sensors 22, 23.

During operation the pressurised fluid 13 in the fluid channel 3 may follow a sine wave pressure fluctuation in accordance with the settings of the frequency adjustment component 10 and the amplitude adjustment component 11. The reference pressure sensor 22 and the test pressure sensor 23 experience this dynamic pressure fluctuation and generate corresponding signals via the reference sensor signal output interface 25 and the test sensor signal output interface 26. If the amplitude and the period of the two sensor signals are identical than this is a confirmation that the tested test pressure sensor 23 works accurately. If the amplitude is different than possibly the amplitude can be calibrated for the test pressure sensor 23 by changing the sensitivity of a test pressure sensor. If the period of these two sensors is different or the signals are completely different between the signals of the test pressure sensor 23 and the reference pressure sensor 22 it has to be acknowledged that there is the likelihood that the test pressure sensor is defect. In this case this test via the pressure sensor verification device 1 results in the conclusion that the test pressure sensor 23 should be replaced and a new test pressure sensor 23 should be incorporated into the gas turbine engine from which the test pressure sensor 23 was removed.

Turning now to FIG. 2 to 5 and FIG. 6 in these figures details of two alternatives of the frequency adjustment component 10 is shown. In FIG. 2 to 5 a first embodiment of the frequency adjustment component 10 is shown as this component 10 comprises a turning wheel 30 which is continuously rotating during operation of the pressure sensor verification device 1. The turning wheel is partly a cylindrical component in which a large number of slots are incorporated through which air can pass in a radial direction of the turning wheel 30. So if an airflow from the fluid channel 3 is exhausted onto the turning wheel 30 the pressurised fluid 13 hits alternatingly the surface of the cylinder or a consecutive slot 31. In consequence the pressurised fluid 13 is blocked and unblocked depending on the position of the turning wheel. If the turning wheel is rotated continuously at the specific speed for example between 100 Hertz and 400 Hertz, a sine wave pressure fluctuation is generated within the fluid channel 3.

The turning wheel 30 is partly a rotational symmetric component which is shown in FIG. 2 to 5 from different angles and in cross-sectional views from two different angles. The slotted turning wheel 30 is particularly driven by a motor 14 as shown in FIG. 1 which may be an electric motor or pneumatic motor. The motor may be adjusted in its rotating speed by a potentiometer (not shown). The configuration of FIG. 2 to 5 can also be called a tooth wheel 32 as the cylindrical element with its plurality of slots 31 can also be seen as teeth arranged in a cylindrical way.

FIG. 6 shows a different embodiment of a turning wheel 30 in an abstract view. Only a side view is shown in which a single slot is arranged in circumferential direction on the cylindrical surface of the turning wheel 30. The single circumferential slot in the turning wheel 30 is narrowing and widening so that a different amount of pressurised fluid 13 can pass through this slot. In consequence again a sine wave is generated for the pressure of the pressurised fluid 13 within the fluid channel 3.

Note that the turning wheel 30, which may be implemented as discussed in relation to FIG. 2-5 or 6, can also be seen in FIG. 1 as part of the overall component.

Referring back to FIG. 1, previously it was already introduced that a fluid channel 3 is present in body 2. The amplitude adjustment component 11 and frequency adjustment component 10 and also the positions of the pressure sensors are different along the length of the fluid channel 3. The frequency adjustment component may be located at the first position 41. The amplitude adjustment component 11 may be located as a second position 42. The first position 31 and the second position 42 are not identical in respect of the distance to the input port 12. The location of the first aperture 20 and the second aperture 21 is both at a third position 43 along the fluid channel 3. In the preferred embodiment of FIG. 1, starting from the input port 12 and then following a downstream direction, the fluid 13 will be guided through the fluid channel 3 first to the amplitude adjustment component 11 at the second position 42, then in flow direction further on to the third position 43 for the two sensor devices, and eventually at a first position 41 to the frequency adjustment component 10. The first position 41, the second position 42, and the third position 43 are clearly different positions along the fluid channel 3, distant to another.

At the third position 43 the two sensors 22, 23 may optionally not be inserted directly into the body to but inserted into a replaceable adapter element 50 which in turn can be inserted into the body as a completely assembled element together with the two sensors 22, 23. The replaceable adapter element 50 also includes a section of the fluid pipe 3, which is in alignment with the remainder of the fluid pipe 3 once inserted in the body 2.

Preferably the main parts of the pressure sensor verification device 1 are generated via additive manufacturing (3D printing), particularly via a powder bed fusion process. Most preferably selective laser melting is used. Particularly the body 2 is 3D-printed by a single additive manufacturing process so that the body 2 including its fluid channel 3 together with several elements for connecting the other components is printed in a single manufacturing procedure. Also the turning wheel 30 may be printed via additive manufacturing. Such an additively manufactured component is shown in FIG. 7 from the outside. So FIG. 7 does not show an external housing into which the pressure sensor verification device 1 is inserted, but it shows the pressure sensor verification device 1 as it is printed in a single additive manufacturing process. So the exterior of the pressure sensor verification device 1 shows also the printed device from the outside.

During operation the pressure sensor verification device may be operated by batteries so that the motor 14 is driving the turning wheel 30. The amplitude adjustment component 11 may be manually set to a specific setting. Also a control device can set the amplitude adjustment component 11. A source for pressurised fluid, particularly air, will be connected via the input port 12 to the pressure sensor verification device 1. In consequence a pressure fluctuation is generated within the fluid channel 3 via the delivered and guided pressurised fluid 13. Signals are generated by the sensors that represent the output signals of the reference pressure sensor 22 and the to be tested test pressure sensor 23.

When performing several tests, the amplitude may be altered during the test by changing the setting of the amplitude adjustment component 11. Additionally or alternatively the frequency may be altered by the frequency adjustment component 10, particularly by changing the speed of the motor that drives the turning wheel 30. In such a way several test signals can be generated for different pressure amplitudes and different pressure periods so that the test pressure sensor 23 can be checked for accuracy of its signals during operation. In consequence test sensors which show a defect can be identified and can be removed from an engine. By exposing the dynamic pressure sensor 23 to the generated pressure the sensitivity of the tested sensor could be verified. By comparing the pressure reading of the tested sensor 23 with the internal reference sensor 22 the pressure sensitivity of the test pressure sensor 23 can be defined.

The overall unit of the pressure sensor verification device 1 can particularly be a portable device so that the unit can be brought into the neighbourhood of a large industrial engine or aero engine into which one or a plurality of pressure sensors is installed. These installed pressure sensors can be decoupled from the engine and connected to the pressure sensor verification device 1 for a test period as a test pressure sensor 23. It is even possible that the to be tested pressure sensor 23 remains in the location of the engine and only a waveguide 24 is connected to the to be tested pressure sensor 23 which allows that the test is performed via the pressure sensor verification device 1 without removing the test pressure sensor 23 from its designed position of the to be tested engine.

To improve the handling of the pressure sensor verification device 1 the body 2 may be additively manufactured as a handle of a handheld device. This handle can be used to carry the device or to connect it from the outside to an engine in which the to be tested sensors are located. The pressure sensor verification device 1 has the advantage to be lightweight, compact, battery powered, easier to use and manufactured very quickly via additive manufacturing.

Usage of such a verification device is particularly anticipated for gas turbine engine, but it is not limited to this field. It may also be used in automotive industry or aerospace industry, in every situation where a dynamic pressure sensor is used.

## Claims

1. Pressure sensor verification device (1), particularly for verification and/or calibration of a dynamic pressure sensor,
comprising:
- body (2) comprising a fluid channel (3) for guiding a pressurised fluid (13);
- input port (12) of the body (2) for the fluid channel (3), via which the pressurised fluid (13) is providable to the fluid channel (3);
- frequency adjustment component (10) located at a first position (41) in the fluid channel (3) for setting and/or adjusting a frequency of fluid oscillations within the fluid channel (3);
- amplitude adjustment component (11) located at a second position (42) in the fluid channel (3) for setting and/or adjusting an amplitude of the fluid oscillations within the fluid channel (3);
- a first aperture (20) in the body (2) to the fluid channel (3), the first aperture (20) being located at a third position (43) and arranged to provide a fluidic connection to a connectable reference pressure sensor (22) ;
- a second aperture (21) in the body (2) to the fluid channel (3), the second aperture (21) being located at the third position (43) and arranged to provide a fluidic connection to a connectable, to be verified or to be calibrated pressure sensor (23);
- at least one sensor signal output interface (25,26) for providing signals from the pressure sensor (23) and/or signals from the reference pressure sensor (22) during operation.

2. Pressure sensor verification device (1) according to one of the preceding claims,
further comprising an evaluation unit for comparing the signals from the pressure sensor (23) and the signals from the reference pressure sensor (22) with another, the signals being provided from the at least one sensor signal output interface (25,26) during operation and/or for comparing the signals from the pressure sensor (23) and/or the signals from the reference pressure sensor (22), received from the at least one sensor signal output interface (25,26) during operation, with stored nominal oscillation data.

3. Pressure sensor verification device (1) according to one of the preceding claims,
**characterised in that**
the pressure sensor (23) is insertable in a socket (28) of the body (2) such that a pressure sensitive sensor face or membrane of the pressure sensor (23) is located in the second aperture (21), and/or
the pressure sensor (23) is connectable via a waveguide pipe (24) to a socket (27) of the body (2) such that a pressure sensitive sensor face or membrane of the pressure sensor (23) is connected to the waveguide pipe (24).

4. Pressure sensor verification device (1) according to one of the preceding claims,
**characterised in that**
the reference pressure sensor (22) is insertable in a socket (28) of the body (2) such that a pressure sensitive sensor face of the reference pressure sensor (22) is located in the first aperture (20), and/or
the reference pressure sensor (22) is connectable via a waveguide pipe (24) to a socket (28) of the body (2) such that a pressure sensitive sensor face of the reference pressure sensor (22) is connected to the waveguide pipe (24).

5. Pressure sensor verification device (1) according to one of the preceding claims,
**characterised in that**
the amplitude adjustment component (11) comprises a regulator to alter an amount of fluid flow of the pressurised fluid (13) through the fluid channel (3) during operation.

6. Pressure sensor verification device (1) according to one of the preceding claims,
**characterised in that**
the frequency adjustment component (10) comprises a continuously turning wheel (30) at a variable speed to repeatedly and consecutively
(a) block and unblock or
(b) throttle and increase
a fluid flow in the fluid channel (3) during operation, preferably to generate an oscillation of the fluid flow substantially in form of a sine wave.

7. Pressure sensor verification device (1) according to claim 6,
**characterised in that**
the turning wheel (30) is configured as
(A) a tooth wheel (32) or
(B) as a circumferentially slotted wheel (33) with a widening and consecutively narrowing slot in circumferential direction.

8. Pressure sensor verification device (1) according to one of the preceding claims,
**characterised in that**
the amplitude adjustment component (11) and/or the frequency adjustment component (10) each are each operated by a potentiometer or a motor, particularly a pneumatic motor.

9. Pressure sensor verification device (1) according to one of the preceding claims,
**characterised in that**
the first, the second, and the third position (41, 42, 43) define different longitudinal positions along a length of the fluid channel (3),
preferably the second position (42) being located upstream of the third position (43), and/or the third position (43) being located upstream of the first position (41).

10. Pressure sensor verification device (1) according to one of the preceding claims,
**characterised in that**
the body (2) comprises a replaceable adapter element (50), wherein the first aperture (20) and the second aperture (21) are arranged in the replaceable adapter element (50), the adapter element further also forming a section of the fluid channel (3) at the third position (43) when the adapter element is inserted into a recess of the body (2).

11. Method of manufacturing a pressure sensor verification device (1) as arranged according to one of the claims 1 to 10,
**characterised in that**
generating the body (2) via additive manufacturing, particularly via a powder bed fusion process, more preferably via selective laser melting.

12. Method of operating a pressure sensor verification device (1) as arranged according to one of the claims 1 to 10, comprising the steps of:
(a) connecting the reference pressure sensor (22) to the first aperture (20);
(b) connecting the to be verified or to be calibrated pressure sensor (23) to the second aperture (21);
(c) supplying the pressurised fluid (13) to the input port (12) with a given, particularly constant, pressure;
(d) throttling a throughflow of the fluid through the fluid channel (3) in consequence of the amplitude adjustment component (11) being altered to a test amplitude, particularly by reducing a cross sectional area of the fluid channel (3) at the second position (42);
(e) setting a pressure oscillation frequency in consequence of the frequency adjustment component (10) being set to a test frequency, particularly by setting a rotational speed of a turning wheel (30) of the frequency adjustment component (10);
(f) providing pressure signals from the pressure sensor (23) and the reference pressure sensor (22) over time via the at least one sensor signal output interface (25, 26).

13. Method of operating a pressure sensor verification device (1) according to claim 12,
comprising the further step of:
(g) comparing simultaneous pressure signals from the pressure sensor (23) and the reference pressure sensor (22), the simultaneous pressure signals being provided from the at least one sensor signal output interface (25, 26).

14. Method of operating a pressure sensor verification device (1) according to one of the claims 12 to 13,
comprising the further step of:
(h) repeating the steps (d) to (f) or (d) to (g) wherein throttling settings in step (d) and/or pressure fluctuation frequency settings in step (e) are altered over time.
